# FASCICULE DE BREVET EUROPEEN

(11) **EP 0 931 638 B1**
(45) Date de publication et mention de la délivrance du brevet: **09.04.2003**
(21) Numéro de dépôt: 99450004.9
(22) Date de dépôt: 21.01.1999
(51) Int. Cl.: B29C 53/56, G10K 11/16

(54) **Procédé de dépose simultanée par bobinage sur un support de plusieurs mèches de fibres pré-imprégnées, dispositif pour sa mise en oeuvre et structures en matériau composite ainsi obtenues**
Verfahren und Vorrichtung zur simultanen Aufwicklung von mehreren vorimprägnierten Fasersträngen auf einen Kern und so hergestellte Verbundwerkstoffstrukturen
Method and apparatus for winding simultaneously several fiber strands on a support and composite structures thus produced

(30) Priorité: 23.01.1998 FR 9800936
(43) Date de publication de la demande: 28.07.1999
(73) Titulaire: AEROSPATIALE SOCIETE NATIONALE INDUSTRIELLE, Société Anonyme, 75781 Paris Cedex 16 (FR)
(72) Inventeur: Monget, François, 33700 Merignac (FR); Decraecker, Patrick, 33460 Arsac (FR)
(74) Mandataire: Thébault, Jean-Louis

(56) Documents cités:
- EP-A- 0 493 046
- EP-A- 0 724 946
- US-A- 4 600 619
- US-A- 5 639 175

## Description

La présente invention a trait à la dépose simultanée par bobinage sur un support de plusieurs mèches de fibres pré-imprégnées.

L'un des buts de l'invention est de réaliser par bobinage de mèches de fibres pré-imprégnées d'une résine et/ou d'une colle appropriées une peau active d'un panneau en matériau composite d'atténuation acoustique.

D'une manière générale, un tel panneau est constitué d'un sandwich comprenant une âme centrale à structure en nid d'abeille flanquée, d'un côté, d'une peau passive, imperméable aux sons et, de l'autre côté, d'une peau active, perméable aux sons et donc dotée d'une porosité appropriée.

Une telle peau active peut être réalisée de plusieurs manières.

Elle peut être constituée d'une ou plusieurs feuilles métalliques perforées régulièrement de trous calibrés.

Elle peut également être constituée d'un tissu métallique autorigide, communément dénommé wiremesh, renforcé par exemple par un tissu en fibres de carbone à grande maille pour augmenter la tenue structurale de la face exposée du panneau.

La maitrise de la porosité, c'est-à-dire le taux d'obturation, du complexe tissu métallique-tissu de carbone est très difficile. Si la porosité propre de chaque constituant est connue et maîtrisée, la porosité finale de l'assemblage est souvent éloignée de la porosité théorique attendue. La raison essentielle de ce phénomène est l'obturation de certains des interstices entre les fils ou filaments desdits constituants par fluage de la colle d'assemblage des constituants entre eux ainsi que du tissu métallique à la structure en nid d'abeille.

Par EP-A-0 724 946, on connaît un procédé de bobinage simultané en superposition de deux mèches sur un mandrin rotatif.

Dans EP-A-0 493 046, on décrit un procédé de bobinage dans lequel deux fils sont disposés à la surface d'un mandrin de façon séparée et parallèle.

On a déja proposé un panneau d'atténuation acoustique dont la peau active est réalisée par bobinage de mèches de fibres pré-imprégnées, en sorte d'obtenir une peau constituée uniquement de fibres noyées dans une matrice de résine.

Le bobinage de cette peau active requiert néanmoins une certaine précision afin de conférer à la peau la perméabilité aux sons désirée entre deux enroulements successifs par un espacement approprié.

Cependant, cette technique est limitée à la réalisation d'un peau de relativement faible épaisseur, car plus l'épaisseur de la peau est importante et plus la porosité non seulement se réduit mais devient aléatoire, car le contrôle du positionnement précis des mèches bobinées est extrêmement difficile.

L'application de cette technique, illustrée par exemple par la demande de brevet français FR-A-2-767-411 déposée au nom de la Demanderesse, à la réalisation d'un renfort structural sur l'une des faces d'un tissu métallique au lieu et place dudit tissu de carbone à grande maille, ne permet pas de résoudre de manière satisfaisante le problème de la précision de la porosité, tout particulièrement si l'on souhaite donner à ce renfort structural une épaisseur substantielle supérieure à celle d'une seule nappe de mèches bobinées.

Un autre but de l'invention est de proposer un moyen de réduire les temps de bobinage de mèches de fibres pré-imprégnées sur un support quelconque, qui peut être par exemple le mandrin de bobinage lui-même, ou un élément rapporté sur ce mandrin, tel qu'une structure en nid d'abeille, un tissu ou feuille perforée ou non, métallique.

A ces effets, l'invention a pour objet un procédé de dépose simultanée par bobinage sur un support de plusieurs mèches de fibres pré-imprégnées, dans lequel on amène en superposition au moins deux mèches à l'endroit de dépose sur le support, entraîné en rotation, caractérisé en ce que lesdites mèches sont mises en tension à des valeurs différentes en proportion du rang de superposition des mèches, la mèche la plus proche du support étant la plus tendue.

Suivant une première application, le bobinage est réalisé en sorte d'obtenir un enroulement hélicoïdal à spires jointives, à au moins une nappe.

Suivant une seconde application plus spécifiquement destinée à la réalisation d'une peau active perméable aux sons, le bobinage est réalisé en sorte d'obtenir un enroulement hélicoïdal à spires non jointives, à au moins une nappe.

L'écartement entre deux spires adjacentes est constant le long d'une génératrice du support rotatif ou variable localement le long de ladite génératrice.

L'angle d'inclinaison des mèches sur l'axe du support rotatif, généralement constant d'une extrémité à l'autre dudit support, est compris entre pratiquement 90°, les enroulements étant du type circonférentiel, et quelques degrés, les enroulements étant du type longitudinal.

Le nombre de mèches superposées peut être quelconque et dépasser la dizaine et les caractéristiques physiques, voire la nature même, de chaque mèche peuvent varier. C'est ainsi que la section, la densité de filaments, la largeur peuvent varier d'une mèche à l'autre selon les objectifs à atteindre.

Le support sur lequel sont bobinées les mèches peut être un tissu métallique, le complexe ainsi obtenu, après polymérisation, étant destiné à constituer une peau active d'un panneau en matériau composite d'atténuation acoustique.

Le support peut être également une structure en nid d'abeille, préalablement mise en place sur un mandrin, les mèches ainsi bobinées constituant la peau active d'un panneau d'atténuation acoustique.

Suivant une variante du procédé appliqué à la réalisation d'une peau active, on bobine simultanément plusieurs groupes de mèches superposées, lesdits groupes étant disposés côte à côte et séparés par un fil ou ruban séparateur susceptible d'être retiré après polymérisation de la résine des fibres et/ou de la colle.

Ceci permet d'obtenir un espacement très précis entre deux spires adjacentes de l'enroulement hélicoïdal.

Dans le cas d'un bobinage à spires jointives, le support de bobinage peut être, selon le cas, soit un mandrin pour un bobinage direct suivi de la mise en place d'autres éléments tels qu'une structure en nid d'abeille, un tissu, une feuille métallique, etc..., soit un ou plusieurs éléments préalablement mis en place sur un mandrin, tels qu'une peau ou une structure en nid d'abeille, soit encore une structure faisant office de mandrin rotatif, telle qu'une enveloppe métallique pour la réalisation de récipients de stockage de fluide sous haute pression.

La pré-imprégnation à l'aide d'une résine et/ou une colle appropriées des fibres des mèches est réalisée à la fabrication des mèches ou bien in situ par passage des mèches dans un bain approprié juste avant leur dépose sur le support rotatif.

L'invention a également pour objet un dispositif pour la mise en oeuvre du procédé caractérisé par des moyens spécifiques pour placer en superposition les mèches, leur donner la tension appropriée, les guider latéralement éventuellement juste avant leur dépose sur le support rotatif, ou encore des moyens pour l'acheminement et le positionnement des groupes de mèches superposées avec séparateur dans la variante mentionnée plus haut.

L'invention a enfin pour objet toute structure ou partie de structure incluant une peau ou revêtement constitué de mèches déposées conformément au procédé.

D'autres caractéristiques et avantages de l'invention ressortiront de la description qui va suivre de modes de mise en oeuvre du procédé, description donnée à titre d'exemple uniquement est en regard des dessins annexés sur lesquels :
- Figure 1 est une vue en perspective partielle d'un dispositif de mise en oeuvre du procédé de l'invention ;
- Figure 2 est une vue schématique de la chaîne de dépose d'une mèche à partir d'une bobine ;
- Figure 3 est une vue en section d'un ensemble de trois mèches ;
- Figure 4 est une vue en section d'un groupe de plusieurs ensembles de mèches superposées, séparés par un fil ou ruban séparateur, et
- Figure 5 est un schéma illustrant le placement des mèches et séparateurs de la figure 4.

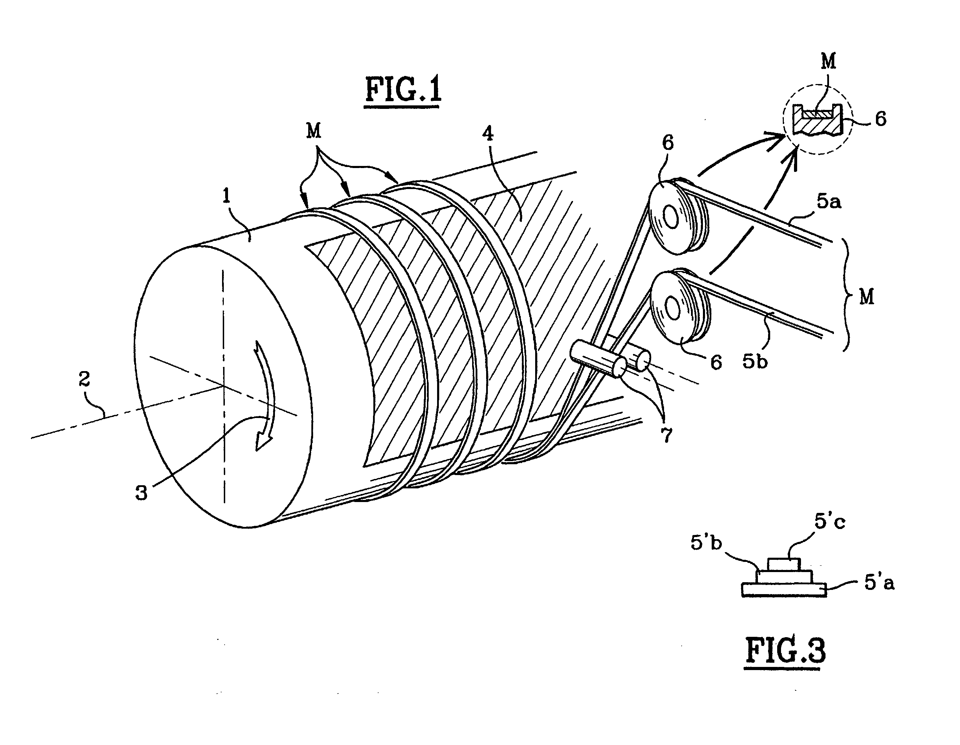

Sur la figure 1, on a représenté schématiquement en 1 un mandrin cylindrique d'axe 2, entraîné en rotation selon le sens de la flèche 3 par des moyens appropriés conventionnels non représentés.

La figure illustre le renforcement d'un tissu métallique représenté en 4, à l'aide de mèches M de fibres, par exemple de carbone, pré-imprégnées, afin de réaliser une peau active destinée par exemple à un panneau en matériau composite d'atténuation acoustique, ladite peau étant constituée du tissu métallique 4 renforcé sur l'une de ses faces de mèches parallèles à distance constante déterminée les unes des autres, l'ensemble étant solidarisé par polymérisation de la résine d'imprégnation des fibres.

A cet effet, le tissu métallique 4 est plaqué et fixé sur le mandrin 1 par tous moyens appropriés.

Les mèches M, conformément à l'invention, sont bobinées en superposition autour du mandrin 1, avec un espacement pré-déterminé constant entre deux spires adjacentes comme illustré par la figure 1.

Les mèches M, au nombre de deux, respectivement 5a et 5b, sur la figure, proviennent de deux bobines (non représentées) et sont placées, au voisinage du mandrin 1, en superposition à l'aide de deux poulies folles 6, d'axe parallèle à l'axe 2.

De préférence, les poulies 6 sont des poulies à gorge à fond plat et calibrée en fonction de la largeur de mèches pour une superposition précise sans déport latéral d'une mèche par rapport à l'autre.

Eventuellement et en complément, deux galets parallèles 7 de guidage latéral sont prévus, disposés entre les poulies 6 et la zone de dépose des mèches sur le mandrin, les deux mèches 5a, 5b défilant entre ces deux galets, séparés d'une distance égale à la largeur des mèches.

En outre, conformément à l'invention, les deux mèches 5a, 5b sont soumises, en cours de bobinage, à des tensions différentes, la tension de la mèche de rang 1, à partir du mandrin, c'est-à-dire la mèche 5a étant supérieure à celle de la mèche de rang 2 (5b) ou mèche extérieure.

Par exemple, les mèches sont constituées de 12 000 filaments ou fibrilles et ont une section rectangulaire de 0,35 mm d'épaisseur et 3,38 mm de largeur. La tension de bobinage de la mèche de rang 1 ou mèche intérieure (5a) est de l'ordre de 4 à 6 daN cependant que la tension de l'autre mèche (5b) est de l'ordre de 2 à 3 daN.

D'une manière générale et de préférence, la tension de la mèche extérieure (5b) est comprise entre la moitié et les deux tiers environ de celle de la mèche de dessous ou intérieure (5a).

Le nombre de mèches superposées peut bien entendu être supérieur à deux et dépasser la dizaine par exemple. D'une manière générale, on appliquera aux mèches ainsi superposées, une tension de bobinage qui ira en décroissant depuis la mèche de rang 1 (la plus proche du mandrin une fois en place) jusqu'à la mèche de dernier rang (mèche extérieure ou la plus éloignée du mandrin).

Les mèches M sont formées de fibres de carbone haute résistance ou de tout autre fibre naturelle ou synthétique (verre, Kevlar, aramide, etc...) habituellement utilisée dans la réalisation de pièces ou structures en matériau composite. Le nombre de filaments ou fibrilles par mèche peut varier, par exemple 6 000 ; 12 000 ou 24 000, de même que la section (largeur, épaisseur).

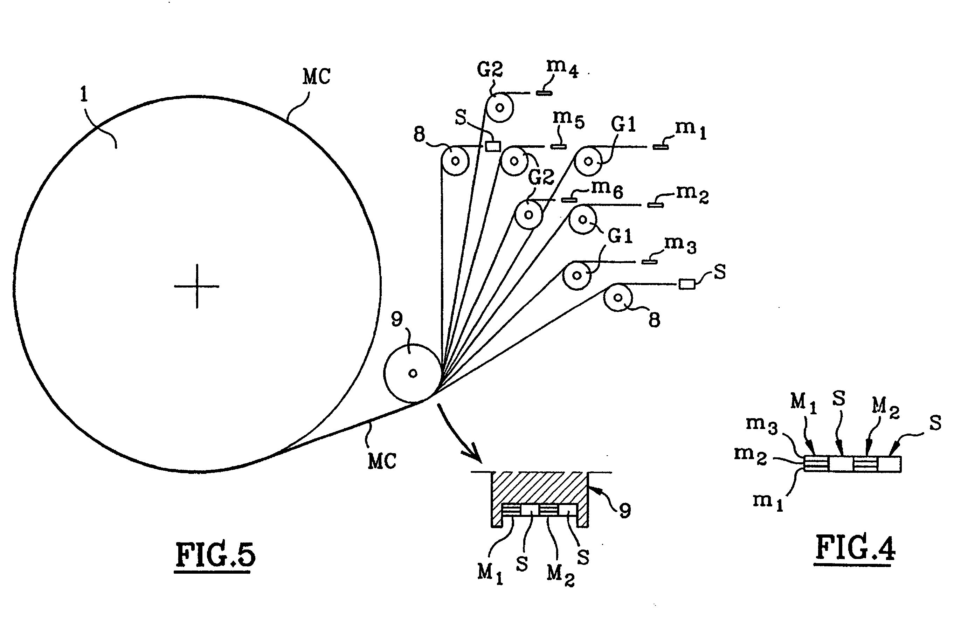

Les mèches superposées ont généralement une même largeur, mais, selon les applications, elles pourraient avoir des largeurs différentes, par exemple et comme illustré par la figure 3, une largeur décroissante depuis la mèche de premier rang 5'a jusqu'à la mèche de troisième rang 5'c, la mèche intermédiaire 5'b ayant une largeur intermédiaire.

Suivant une variante de mise en oeuvre, les mèches superposées peuvent être constituées d'une ou plusieurs mèches de section rectangulaire sur lesquelles est placée une mèche formée d'un fil rond, en particulier un fil guipé, c'est-à-dire enveloppé d'un fil torsadé de même nature. En effet, un tel fil rond, qui possède une épaisseur sensiblement plus grande que celle des mèches plates, accroît l'inertie mécanique de la peau constituée d'un tel bobinage.

L'inclinaison en cours de bobinage des mèches par rapport à l'axe 2 du mandrin peut être variable d'un tissu métallique 4 à l'autre selon les applications.

Cette inclinaison peut couvrir toute la plage des inclinaisons possibles dans le domaine du bobinage, c'est-à-dire entre pratiquement 90° (enroulement de type circonférentiel) et quelques degrés (enroulement du type longitudinal).

Sur la figure 1, l'enroulement est de type circonférentiel.

Les mèches déposées sont, selon le placement du tissu métallique 4 sur le mandrin, parallèles aux fils de trame (ou de chaîne) du tissu métallique 4, ou au contraire forme un angle, par exemple de 45°, vis à vis de ces fils de trame et chaîne.

Il est à noter que sur un même tissu métallique 4, les mèches peuvent être bobinées suivant plusieurs inclinaisons, par exemple deux inclinaisons à ± 45° par rapport à l'axe du mandrin, ou trois inclinaisons, respectivement ± 45° et 90°. Dans ces applications, les mèches sont ainsi bobinées suivant deux ou trois nappes, une nappe étant définie comme l'ensemble des mèches ayant la même inclinaison ou direction, quelle que soit l'épaisseur de l'ensemble bobiné.

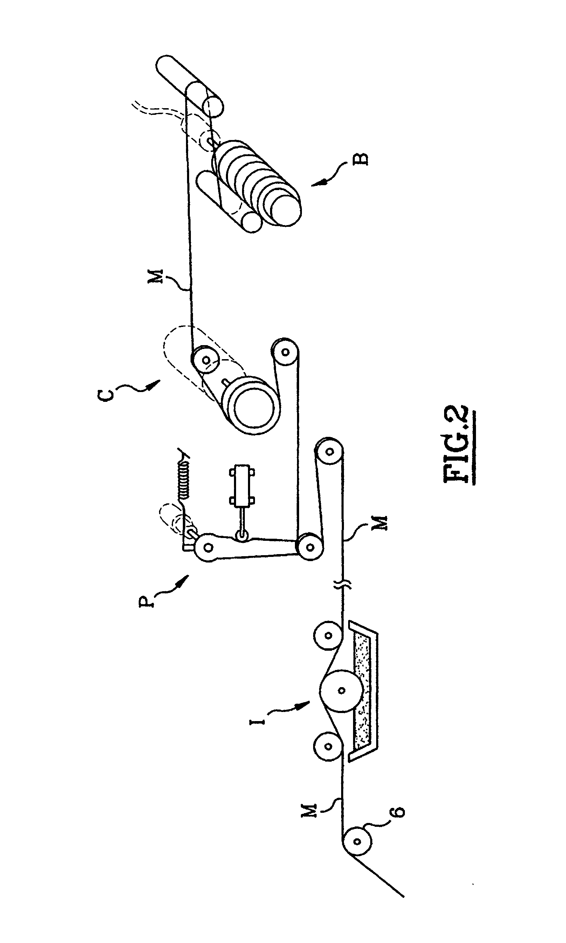

La figure 2 illustre la chaîne d'acheminement d'une mèche M depuis une bobine de stockage B jusqu'à une poulie 6.

La bobine B est, par exemple et à la manière connue, montée sur un tambour entraîné par un moteur pneumatique. La mèche M dévidée par un coupleur C, passe ensuite dans un dispositif de rattrapage de mou de type pantin P, puis est dirigée vers la poulie 6.

Les mèches sur les bobines B sont soit pré-imprégnées d'une résine, par exemple thermodurcissable, ou d'une colle appropriée, soit non-imprégnées, auquel cas elles subissent une pré-imprégnation dite in situ ou "wetting", immédiatement en amont des poulies 6, par exemple par passage dans un poste d'imprégnation sur galet, symbolisé en I, à l'aide d'une résine appropriée, ou d'une colle également appropriée.

Dans le cas d'une pré-imprégnation résine + colle, les mèches sont d'abord imprégnées d'une résine appropriée, puis imprégnées d'une colle appropriée, par exemple celle connue sous la dénomination commerciale Loctite ou celle dénommée Isol, à des fins de renforcement du collage notamment du carbone sur du métal.

Par le réglage de l'écartement entre deux paires adjacentes de mèches sur le tissu métallique 4, c'est à dire du pas de l'enroulement hélicoïdal, on peut ainsi conférer une porosité déterminée précise à l'ensemble constitué du tissu métallique 4 et des mèches de renfort.

Cet ensemble est polymérisé à la manière connue, puis retiré du mandrin.

Sa souplesse lui permet d'être rapporté et collé sur une face concave ou convexe d'une structure en nid d'abeille pour former une peau active d'un panneau en matériau composite.

Le procédé de l'invention permet en particulier de réaliser des peaux actives internes de panneaux d'atténuation acoustique de fans présentant des propriétés à la fois d'atténuation acoustique et de tenue structurale tout à fait satisfaisantes.

Par ailleurs, ni le poids, ni l'épaisseur de la peau active ne sont très sensiblement augmentés par le bobinage de mèches superposées eu égard à l'amélioration sensible des performances mécaniques et acoustiques.

Le procédé de l'invention peut être mis en oeuvre à d'autres fins que la réalisation d'une peau active à porosité contrôlée.

C'est ainsi que le bobinage des mèches superposées, quel qu'en soit le nombre, peut être réalisé à spires jointives, ce qui, par rapport à un bobinage à spires jointives conventionnel à mèche unique ou plusieurs mèches côte à côte, permet d'obtenir une épaisseur de revêtement bobiné en un temps beaucoup plus court.

Dans cette application, les conditions de tension des mèches superposées sont similaires à celles exposées plus haut à propos de la figure 1, toujours pour la même raison : éviter une trop importante compression de la ou des mèches déposées sous-jacentes.

Les mèches superposées peuvent être, selon les applications, bobinées directement sur un mandrin qui est soit un outil de bobinage standard ou réalisé pour la circonstance et de préférence revêtu préalablement d'un agent démoulant, soit une structure qu'il faut revêtir d'un enroulement filamentaire, telle qu'une enveloppe métallique d'un récipient de stockage de fluide sous haute pression, ou une virole d'une capacité de grandes dimensions.

Dans le cas d'un mandrin constitué par un outil de bobinage, ce dernier peut être de diverses natures, par exemple métallique, en matière plastique du type mousse, en sable de fonderie par exemple en "arenyl", ou encore en matériau composite, moins coûteux que le métal.

Les mèches superposées peuvent également être bobinées sur un ou plusieurs éléments d'une structure ou pièce en matériau composite, déjà en place sur un mandrin, par exemple une première peau réalisée par bobinage ou drapage, recouverte d'une âme en nid d'abeille, en sorte d'obtenir un panneau dont la peau externe sera constituée de l'enroulement desdites mèches superposées.

Dans ces applications, le mandrin peut être extractible ou fusible, si nécessaire, pour récupérer l'ensemble mis en place sur le mandrin.

Suivant une variante, illustrée par les figures 4 et 5, d'enroulement à spires non jointives en vue de réaliser une peau à taux de porosité déterminé, constituée d'une nappe de mèches superposées bobinées directement sur un mandrin 1 ou sur un élément métallique perméable aux sons fixé sur le mandrin (tôle mince perforée, tissu métallique ou analogues), on peut bobiner simultanément plusieurs groupes (deux sur les figures 4 et 5) de mèches superposées.

La figure 4 est une section d'un ensemble formant en quelque sorte une mèche complexe bobinée comme s'il s'agissait d'une mèche unique et constituée de quatre parties disposées côte à côte, à savoir deux groupes M1, M2 de trois mèches superposées et deux éléments séparateurs S constitués par un fil ou un ruban.

Les quatre parties M₁, M₂, S sont placées en alternance afin que la dépose sur le mandrin 1, côte à côte, de l'ensemble de la figure 4 réalise un enroulement hélicoïdal à pas constant dont la valeur correspond à la largeur du fil ou ruban séparateur S.

Les mèches des groupes M₁, M₂ sont généralement identiques et l'épaisseur du fil ou ruban S correspond à au moins l'épaisseur desdits groupes.

Le séparateur S est destiné essentiellement à conférer aux spires de l'enroulement sur le mandrin 1 un espacement constant et très précis et doit être retiré, une fois effectuée la polymérisation de la résine d'imprégnation des fibres des mèches et éventuellement de la résine adhésive de fixation de l'enroulement ainsi réalisé sur la structure ou le support sous-jacent ou de fixation de parties de cette structure.

A cet effet, le séparateur S est non adhésif et par exemple constitué de verre imprégné de téflon.

La figure 5 illustre un exemple de moyens pour la mise en place sur le mandrin 1 de la mèche complexe de la figure 4.

Les mèches m₁, m₂, m₃ et m₄, m₅, m₆, respectivement, de chaque groupe M₁, M₂, sont rassemblés de la même manière que sur la figure 1 à l'aide de deux groupes respectivement G1 et G2 de poulies à gorge calibrée.

Les poulies du groupe G1 sont dans un même plan vertical et celles du groupe G2 sont dans un plan vertical décalé latéralement par rapport à l'autre.

Les deux séparateurs S sont de la même manière acheminés par deux poulies 8 convenablement positionnée par rapport aux poulies G₁, G₂.

L'ensemble des éléments m₁ à m₆ et S est rassemblé sur une poulie folle 9 à gorge calibrée, interposée entre le jeu de poulies G1, G2, 8 et le mandrin 1.

La mèche complexe MC ainsi formée est bobinée à spires jointives.

Après polymérisation, le séparateur S est retiré du mandrin par simple dévidage.

Le nombre de mèches d'un groupe G₁ ou G₂ peut être variable, de deux à plus d'une dizaine par exemple. De même, le nombre de groupes de mèches peut être supérieur à deux.

La mèche complexe MC peut être bobinée sur un tissu métallique 4 du type de la figuré 1, couvrant une partie voire la totalité du mandrin 1.

D'une manière générale, la ou les nappes d'enroulement à spires non jointives de mèches superposées, de même que la ou les nappes d'enroulement à spires jointives de ces mêmes mèches superposées, sont soit rapportées sur l'une des faces, ou les deux, d'un élément de structure, simple (tissu métallique par exemple) ou complexe (première peau et âme alvéolaire d'un futur panneau composite par exemple), soit interposées entre deux structures, elles-mêmes simples ou complexes, soit encore directement sur un mandrin de bobinage préalablement revêtu d'un agent démoulant.

Ledit élément de structure simple peut être, comme indiqué ci-dessus, un tissu métallique, mais également, d'une manière générale, tout autre élément de renfort, tel qu'une tôle, un film plastique, par exemple un film de mylar ou un tissu de nature textile du genre toile, voile, bâche, pour des applications à d'autres domaines que l'aéronautique, par exemple la navigation de plaisance, les planches à voile, etc...

Il est à noter par ailleurs que sur un même support, par exemple un tissu métallique, une tôle perforée métallique ou un tissu métallique, les mèches superposées peuvent être bobinées à spires non jointives avec un pas pouvant varier localement, par exemple le long d'une génératrice du tissu métallique ou analogue en cours de bobinage, pour conférer à la peau obtenue des propriétés d'atténuation acoustique variables localement grâce à un taux de porosité différent adapté aux conditions d'utilisation du panneau final incorporant une telle peau active.

La technique de l'invention peut aussi par exemple être avantageusement mise en oeuvre pour la réalisation de panneaux ou pièces de types décrits dans le brevet français de la Demanderesse FR-A-2.767.411.

## Revendications

1. Procédé de dépose simultanée par bobinage sur un support (1) de plusieurs mèches de fibres pré-imprégnées, dans lequel on amène en superposition au moins deux mèches (5a, 5b) à l'endroit de dépose sur le support, entraîné en rotation, **caractérisé en ce que** lesdites mèches sont mises en tension à des valeurs différentes en proportion du rang de superposition des mèches, la mèche (5a) la plus proche du support (1) étant la plus tendue.

2. Procédé suivant la revendication 1, **caractérisé en ce que** la tension de bobinage d'une mèche est comprise entre environ la moitié et les deux tiers de celle de la mèche immédiatement en dessous.

3. Procédé suivant la revendication 1 ou 2, **caractérisé en ce que** les mèches ont des largeurs différentes, notamment décroissantes.

4. Procédé suivant la revendication 3, **caractérisé en ce que** les mèches sont constituées d'une ou plusieurs mèches de section rectangulaire, sur lesquelles est placée une mèche formée d'un fil rond, notamment un fil guipé.

5. Procédé suivant l'une des revendications 1 à 4, **caractérisé en ce que** les mèches (5a, 5b : m₁ à m₆) sont choisies dans le groupe des fibres de carbone, de verre, de Kevlar, d'aramide.

6. Procédé suivant la revendication 5, **caractérisé en ce que** les mèches (5a, 5b ; m₁ à m₆) sont choisies dans le groupe des mèches à 6 000, 12 000 et 24 000 filaments.

7. Procédé suivant l'une des revendications 1 à 6, **caractérisé en ce que** les mèches sont bobinées à spires jointives sur au moins une nappe.

8. Procédé suivant l'une des revendications 1 à 6, **caractérisé en ce que** les mèches (5a, 5b ; m₁ à m₆) sont bobinées à spires non jointives sur au moins une nappe.

9. Procédé suivant la revendication 8, **caractérisé en ce que** plusieurs groupes de mèches superposées (M₁, M₂) séparés par des éléments séparateurs (S) sont bobinés simultanément, lesdits éléments séparateurs étant enlevés ultérieurement.

10. Procédé suivant la revendication 9, **caractérisé en ce que** les éléments séparateurs sont constitués par des fils ou rubans (S) non adhésifs.

11. Procédé suivant la revendication 10, **caractérisé en ce que** les fils ou rubans (S) sont en verre imprégné de Téflon.

12. Procédé suivant l'une des revendications 1 à 11, **caractérisé en ce que** les fibres des mèches (5a, 5b ; m₁ à m₆) sont pré-imprégnées d'une résine et/ou d'une colle, appropriées, à leur fabrication.

13. Procédé suivant l'une des revendications 1 à 11, **caractérisé en ce que** les fibres des mèches (5a, 5b ; m₁ à m₆) sont pré-imprégnées in situ immédiatement avant leur bobinage, à l'aide d'une résine appropriée, puis, éventuellement, pré-imprégnées à l'aide d'une colle appropriée.

14. Procédé suivant l'une des revendications 1 à 13, **caractérisé en ce que** les mèches (5a, 5b ; m₁ à m₆) sont bobinées sur un élément de renfort monté sur un mandrin (1), ledit élément de renfort étant choisi dans le groupe comprenant les éléments métalliques, les films plastiques, les éléments textiles du type toile, voile, bâche.

15. Procédé suivant la revendication 14, **caractérisé en ce que** ledit élément métallique est choisi dans le groupe comprenant les tôles minces perforées ou non, les tissus, les tissus métalliques autorigides (4).

16. Procédé suivant l'une des revendications 1 à 15, **caractérisé en ce que** le bobinage est effectué sous un angle entre 90° et quelques degrés par rapport à l'axe du support rotatif (1).

17. Procédé suivant l'une des revendications 1 à 16, **caractérisé en ce que** le support (1) est un mandrin de bobinage, éventuellement extractible ou fusible, notamment en métal, matière plastique, sable de fonderie, ou matériau composite.

18. Procédé suivant l'une des revendications 1 à 16, **caractérisé en ce que** le support est un mandrin (1) sur lequel est monté un élément à recouvrir constitué par une structure, simple ou complexe.

19. Procédé suivant l'une des revendications 1 à 16, **caractérisé en ce que** le support (1) est une enveloppe métallique.

20. Dispositif pour la mise en oeuvre du procédé selon l'une quelconque des revendications 1 à 19, **caractérisé en ce qu'**il comprend des poulies (6 ; G1, G2) à gorge calibrée pour le placement approprié des mèches (5a, 5b) et des moyens (C, P) pour donner à ces dernières la tension appropriée.

21. Dispositif suivant la revendication 20, **caractérisé en ce qu'**il comporte en outre des moyens de guidage latéral de l'ensemble rassemblé de mèches (5a, 5b ; M₁, M₂) et éventuellement séparateurs (S), immédiatement avant dépose sur le support rotatif (1).

22. Dispositif suivant la revendication 21, plus particulièrement destiné au bobinage d'un seul groupe de mèches (5a, 5b) superposées, **caractérisé en ce que** lesdits moyens de guidage latéral sont constitués par une paire de rouleaux (7).

23. Dispositif suivant la revendication 21, plus particulièrement destiné au bobinage de plusieurs groupes côte à côte de mèches (M₁, M₂), **caractérisé en ce que** lesdits moyens de guidage latéral sont constitués par une poulie (9) à gorge calibrée.

24. Structure en matériau composite telle qu'obtenue conformément au procédé selon l'une quelconque des revendications 1 à 19.

25. Structure selon la revendication 24, constituée d'un wiremesh (4) revêtu sur l'une et/ou l'autre de ses faces de groupes de mèches superposées, disposés en parallèle suivant au moins une nappe, avec un espacement entre deux groupes constant ou variable localement.

26. Structure selon la revendication 24, constituée d'une âme en nid d'abeille flanquée de part et d'autre d'une peau comprenant des mèches noyées dans une résine appropriée polymérisée, l'une au moins des peaux comportant des mèches superposées, bobinées de manière jointives ou non, suivant au moins une nappe.

## Claims

1. A method of depositing simultaneously several strands of preimpregnated fibres by winding on a support (1), in which at least two strands (5a, 5b) are brought superimposed to a deposition point on the support, driven in rotation, **characterised in that** said strands are tensioned by different values in proportion to a mesh superimposition rank, the mesh (5a) closest to the support (1) being the most tensioned.

2. A method according to claim 1, **characterised in that** the winding tension of a strand is between approximately one half and two thirds of that of the strand immediately below.

3. A method according to claim 1 or 2, **characterised in that** the strands have different widths, in particular decreasing.

4. A method according to Claim 3, **characterised in that** the strands are formed from one or more strands with a rectangular cross-section, on which there is placed a strand formed by a round thread, in particular a covered thread.

5. A method according to one of claims 1 to 4, **characterised in that** the strands (5a, 5b; m₁ to m₆) are chosen from the group of carbon, glass, Kevlar and aramid fibres.

6. A method according to claim 5, **characterised in that** the strands (5a, 5b; m₁ to m₆) are chosen from the group of strands with 6000, 12000 and 24000 filaments.

7. A method according to one of claims 1 to 6, **characterised in that** the strands are wound with contiguous turns on at least one layer.

8. A method according to one of claims 1 to 6, **characterised in that** the strands (5a, 5b; m₁ to m₆) are wound in non-contiguous turns on at least one layer.

9. A method according to claim 8, **characterised in that** several groups of superimposed strands (M₁, M₂) separated by separating elements (S) are wound simultaneously, said separating elements being removed subsequently.

10. A method according to claim 9, **characterised in that** the separating elements are formed of non-adhesive threads or ribbons (S).

11. A method according to claim 10, **characterised in that** the threads or ribbons (S) are made from glass impregnated with Teflon.

12. A method according to one of claims 1 to 11, **characterised in that** the fibres of the strands (5a, 5b; m₁ to m₆) are preimpregnated with a resin and/or a glue, as appropriate, at their manufacture.

13. A method according to one of claims 1 to 11, **characterised in that** the fibres of the strands (5a, 5b; m₁ to m₆) are preimpregnated in situ immediately before their winding, by means of an appropriate resin, and then if necessary preimpregnated by means of an appropriate glue.

14. A method according to one of claims 1 to 13, **characterised in that** the strands (5a, 5b; m₁ to m₆) are wound on a reinforcing element mounted on a tube (1), said reinforcing element being chosen from the group comprising metallic elements, plastic films and textile elements of the canvas, gauze or tarpaulin type.

15. A method according to claim 14, **characterised in that** said metallic element is chosen from the group comprising thin sheets, perforated or not, fabrics or self-rigid metallic fabrics (4).

16. A method according to one of claims 1 to 15, **characterised in that** the winding is performed at an angle of between 90° and a few degrees with respect to the axis of the rotary support (1).

17. A method according to one of claims 1 to 16, **characterised in that** the support (1) is a winding tube, possibly extractable or fusible, in particular made from metal, plastics material, foundry sand or composite material.

18. A method according to one of claims 1 to 16, **characterised in that** the support is a tube (1) on which an element to be covered is mounted, consisting of a simple or complex structure.

19. A method according to one of claims 1 to 16, **characterised in that** the support (1) is a metallic envelope.

20. A device for implementing a method according to any one of claims 1 to 19, **characterised in that** it comprises pulleys (6; G1, G2) with a groove calibrated for the appropriate placing of the strands (5a, 5b) and means (C, P) for giving the latter the appropriate tension.

21. A device according to claim 20, **characterised in that** it comprises means for the lateral guidance of the collected assembly of strands (5a, 5b; M₁, M₂) and possibly separators (S), immediately before deposition on the rotary support (1).

22. A device according to claim 21, particularly intended for the winding of a single group of superimposed strands (5a, 5b), **characterised in that** said lateral guidance means includes a pair of rollers (7).

23. A device according to claim 21, particularly intended for winding several side-by-side groups of strands (M₁, M₂), **characterised in that** said lateral guidance means includes a pulley (9) with a calibrated groove.

24. A structure made from composite material as obtained in accordance with the method according to any one of claims 1 to 19.

25. A structure according to claim 24, consisting of a wire mesh (4) covered on one or other or both of its faces with groups of superimposed strands, disposed in parallel in at least one layer, with spacing between two groups which is constant or locally variable.

26. A structure according to claim 24, consisting of a honeycomb core flanked on each side by a skin comprising strands embedded in a suitable polymerised resin, at least one of the skins comprising superimposed strands, wound contiguously or not, in at least one layer.

## Patentansprüche

1. Verfahren zum gleichzeitigen Aufbringen mehrerer Gespinste aus vorimprägnierten Fasern durch Wickeln auf einen Träger (1), wobei dem Aufbringort auf dem rotatorisch angetriebenen Träger wenigstens zwei Gespinste (5a, 5b) überlagert zugeführt werden, **dadurch gekennzeichnet, daß** die Gespinste auf Werte gespannt werden, die im Verhältnis des Überlagerungsrangs der Gespinste verschieden sind, wobei das dem Träger (1) am nächsten befindliche Gespinst (5a) am stärksten gespannt ist.

2. Verfahren nach Anspruch 1, **dadurch gekennzeichnet, daß** die Spannung der Wicklung eines Gespinsts im Bereich von etwa der Hälfte bis etwa zwei Drittel jener des unmittelbar darunterliegenden Gespinsts liegt.

3. Verfahren nach Anspruch 1 oder 2, **dadurch gekennzeichnet, daß** die Gespinste unterschiedliche, insbesondere abnehmende Breiten besitzen.

4. Verfahren nach Anspruch 3, **dadurch gekennzeichnet, daß** die Gespinste aus einem oder aus mehreren Gespinsten mit rechtwinkligem Querschnitt gebildet sind, auf denen ein Gespinst aus einem runden Faden, insbesondere einem Umbindungsgam, angeordnet ist.

5. Verfahren nach einem der Ansprüche 1 bis 4, **dadurch gekennzeichnet, daß** die Gespinste (5a, 5b; m₁ bis m₆) aus der Gruppe der Fasern aus Kohlenstoff, Glas, Kevlar und Aramid gewählt sind

6. Verfahren nach Anspruch 5, **dadurch gekennzeichnet, daß** die Gespinste (5a, 5b; m₁ bis m₆) aus der Gruppe der Gespinste mit 6000, 12000 und 24000 Filamenten gewählt sind.

7. Verfahren nach einem der Ansprüche 1 bis 6, **dadurch gekennzeichnet, daß** die Gespinste in nebeneinanderliegenden Windungen auf wenigstens eine Fläche gewickelt sind.

8. Verfahren nach einem der Ansprüehe 1 bis 6, **dadurch gekennzeichnet, daß** die Gespinste (5a, 5b; m₁ bis m₆) in nicht nebeneinanderliegenden Windungen auf wenigstens eine Fläche gewickelt sind.

9. Verfahren nach Anspruch 8, **dadurch gekennzeichnet, daß** mehrere Gruppen übereinanderliegender Gespinste (M₁, M₂), die durch Trennelemente (S) getrennt sind, gleichzeitig gewickelt werden, wobei die Trennelemente später abgenommen werden.

10. Verfahren nach Anspruch 9, **dadurch gekennzeichnet, daß** die Trennelemente aus Fäden oder nicht klebenden Bändern (S) gebildet sind.

11. Verfahren nach Anspruch 10, **dadurch gekennzeichnet, daß** die Fäden oder Bänder (S) aus mit Teflon imprägniertem Glas bestehen.

12. Verfahren nach einem der Ansprüche 1 bis 11, **dadurch gekennzeichnet, daß** die Fasern der Gespinste (5a, 5b; m₁ bis m₆) bei ihrer Herstellung mit einem geeigneten Harz und/oder Klebstoff vorimprägniert werden.

13. Verfahren nach einem der Ansprüche 1 bis 11, **dadurch gekennzeichnet, daß** die Fasern der Gespinste (5a, 5b; m₁ bis m₆) unmittelbar vor ihrer Wicklung vor Ort mit Hilfe eines geeigneten Harzes vorimprägniert und dann eventuell mit Hilfe eines geeigneten Klebstoffs vorimprägniert werden.

14. Verfahren nach einem der Ansprüche 1 bis 13, **dadurch gekennzeichnet, daß** die Gespinste (5a, 5b; m₁ bis m₆) auf ein Verstärkungselement, das an einem Dorn (1) angebracht ist, gewickelt werden, wobei das Verstärkungselement aus der Gruppe gewählt ist, die Metallelemente, Kunststoffilme und Textilelemente des Typs Leinen, Schleierstofl oder Plane umfaßt.

15. Verfahren nach Anspruch 14, **dadurch gekennzeichnet, daß** das Metallelement aus der Gruppe gewählt ist, die perforierte oder nicht perforierte Dünnbleche, Gewebe und selbstversteifende Metallgewebe (4) umfaßt.

16. Verfahren nach einem der Ansprüche 1 bis 15, **dadurch gekennzeichnet, daß** die Wicklung unter einem Winkel im Bereich von 90° bis zu einigen Grad in bezug auf die Achse des rotierenden Trägers (1) ausgeführt wird.

17. Verfahren nach einem der Ansprüche 1 bis 16, **dadurch gekennzeichnet, daß** der Träger (1) ein Wicklungsdorn ist, der gegebenenfalls extrahierbar oder schmelzbar ist und insbesondere aus Metall, Kunststoff, Formsand oder Verbundwerkstoff besteht.

18. Verfahren nach einem der Ansprüche 1 bis 16, **dadurch gekennzeichnet, daß** der Träger ein Dorn (1) ist, auf dem ein abzudeckendes Element angebracht ist, das aus einer einfachen oder komplexen Struktur gebildet ist.

19. Verfahren nach einem der Ansprüche 1 bis 16, **dadurch gekennzeichnet, daß** der Träger (1) eine Metallhülle ist.

20. Vorrichtung für die Ausführung des Verfahrens nach einem der Ansprüche 1 bis 19, **dadurch gekennzeichnet, daß** es mehrere Wirteln (6; G1, G2), die für die geeignete Anordnung der Gespinste (5a, 5b) kalibriert sind, sowie Mittel (C, P), die diesen letzteren die geeignete Spannung verleihen, umfaßt.

21. Vorrichtung nach Anspruch 20, **dadurch gekennzeichnet, daß** sie außerdem Mittel für die seitliche Führung der zusammengefügten Gesamtheit von Gespinsten (5a, 5b; M₁, M₂) und gegebenenfalls der Trenneinrichtungen (S) unmittelbar vor der Aufbringung auf den rotierenden Träger (1) umfaßt.

22. Vorrichtung nach Anspruch 21, die insbesondere für die Wicklung einer einzigen Gruppe übereinanderliegender Gespinste (5a, 5b) bestimmt ist, **dadurch gekennzeichnet, daß** die Mittel für die seitliche Führung aus einem Paar Rollen (7) gebildet sind.

23. Vorrichtung nach Anspruch 21, die insbesondere für die Wicklung mehrerer nebeneinanderliegender Gruppen von Gespinsten (M₁, M₂) bestimmt ist, **dadurch gekennzeichnet, daß** die Mittel für die seitliche Führung aus einem kalibrierten Wirtel (9) gebildet sind.

24. Struktur aus einem Verbundwerkstoff, die gemäß dem Verfahren nach einem der Ansprüche 1 bis 19 erhalten wird.

25. Struktur nach Anspruch 24, die aus einem Drahtgeflecht (4) gebildet ist, das auf einer und/oder der anderen seiner Flächen mit Gruppen übereinanderliegender Gespinste beschichtet ist, die parallel wenigstens auf einer Fläche angeordnet sind, wobei zwischen zwei Gruppen ein konstanter oder lokal unterschiedlicher Abstand vorhanden ist.

26. Struktur nach Anspruch 24, die aus einer Bienenwabenseele, die beiderseits mit einer Haut versehen ist, die in ein geeignetes polymerisiertes Harz getauchte Gespinste umfaßt, gebildet ist, wobei wenigstens eine der Häute übereinanderliegende und auf wenigstens einer Fläche nebeneinanderliegend oder nicht nebeneinanderliegend gewickelte Gespinste umfaßt.
